# EUROPEAN PATENT APPLICATION

(11) **EP 1 956 539 A2**
(43) Date of publication of application: **13.08.2008**
(21) Application number: 08101230.4
(22) Date of filing: 04.02.2008
(51) Int. Cl.: G06Q 10/00

(54) **Inventory management system**

(30) Priority: 23.05.2007 JP 2007136628; 06.02.2007 JP 2007026767
(71) Applicant: Sanden Corporation, Isesaki-shi, Gunma 372-8502 (JP)
(72) Inventor: Kuwako, Yuji, Gunma 372-8502 (JP); Matsumoto, Naoto, Gunma 372-8502 (JP); Tabata, Masaru, Gunma 372-8502 (JP); Satou, Masaaki, Gunma 372-8502 (JP); Shimamoto, Gaku, Gunma 372-8502 (JP); Kobayashi, Hitomi, Gunma 372-8502 (JP); Nishio, Junichi, Gunma 372-8502 (JP)
(74) Representative: Haley, Stephen

(57) **Abstract**

In the inventory management system managing the inventory status of a commodity (10) displayed in a showcase (300) by using a computer (100), the showcase (300) is provided with an antenna (310) for communicating with an RFID tag (12) attached to a commodity on a commodity shelf, detecting means (322) for detecting a unique number of the RFID tag (12) by communicating with the RFID tag (12) through the antenna (310), and transmitting means (323) for transmitting the detected unique number of the RFID tag (12) to the computer (100) through a network (900). The computer (100) manages the commodity inventory based on the unique number of the RFID tag (12), the unique number being received from the showcase (300).

## Description

### Background of the invention

### Field of the invention

The present invention relates to an inventory management system managing the commodity inventory of a store.

### Description of the related art

Conventionally, a POS system has been widely introduced in a store such as a supermarket and a convenience store. In the POS system, by basically reading a bar-code attached to each commodity when receiving and selling a commodity, the commodity sale management, the commodity ordering management, the commodity sale analysis, and the like are executed. While the number of stocked commodities can be roughly comprehended by subtracting the number of sold commodities from the number of received commodities in the POS system, the calculated number and the actual number of stocked commodities of the POS system may not frequently correspond to each other due to the break, the loss, the theft, and the like of the commodities. Thus, the inventory work is executed by counting the number of stocked commodities with the manpower in a store. In this inventory work, the number of stocked commodities is inputted by using a portable terminal referred to as a handy terminal, and the data inputted to the portable terminal is reflected to the POS system. In the system disclosed by Japanese Patent Publication 2003-323480, a bar-code reader is provided to the handy terminal, and the inputting work is saved by causing the bar-code attached to a commodity to be read.

However, in the conventional POS system, the precise number of stocked commodities can be comprehended only immediately after the inventory work, and can not be comprehended if the interval of the inventory work becomes long. Thus, the loss of sales opportunity due to stock shortage, by contraries, the useless consumption of sales space and the commodity dead line due to overstocked commodities may be induced. The inventory work may be frequently executed to prevent such a disadvantage. However, the manpower is not only necessary for the inventory work, but also, in some kinds of stores, the stores are frequently closed, so that the sales may be reduced.

### Brief summary of the invention

An object of the present invention is to provide an inventory management system in which the precise number of stocked commodities can be always comprehended.

To achieve the above object, the present invention proposes an inventory management system for managing the status of stocked commodities displayed in a showcase by using a computer, in which the showcase is provided with a commodity shelf for displaying a commodity to which an RFID tag is attached, a first antenna for communicating with the RFID tag attached to the commodity on the commodity shelf, first detecting means for detecting a unique identifier of the RFID tag by communicating with the RFID tag through the first antenna, and transmitting means for transmitting the detected unique identifier of the RFID tag to the computer through a network, and the computer is provided with first receiving means for storing a list of the unique identifier received from the first detecting means of the showcase in prescribed memorizing means, and inventory management means for managing commodity inventory based on the unique identifier of the RFID tag, the unique identifier being memorized in the memorizing means.

According to the present invention, the unique identifier of the RFID tag of a commodity displayed in the showcase is read by the first detecting means, and is transmitted to the computer. That is, the computer can always comprehend the unique identifier of the RFID tag of the commodity displayed in the showcase, so that, can always manage the stocked commodity based on the unique identifier of the RFID tag.

As an preferred embodiment of the present invention, the memorizing means of the computer memorizes a corresponding list in which the unique identifier of the RFID tag and an identification number indicating a type of a commodity to which the RFID tag is attached are related to each other, and the inventory management means counts the number of stocked commodities for each type of commodities. Furthermore, as another embodiment, the inventory management means counts the number of stocked commodities for each type of commodities and also for each showcase. According to such inventions, the number of stocked commodities for each commodity and the number of stocked commodities for each showcase can be surely managed.

The present invention proposes the inventory management system in which the inventory management means notifies a manager of a message when the number of stocked commodities becomes equal to or less than a prescribed threshold.

According to the present invention, when the number of stocked commodities displayed in the showcase becomes small, the manager is notified of the message, so that the management work such as the supplying of commodities from a warehouse and the ordering of commodities can be executed without delay. Meanwhile, the threshold may be set for each commodity, for each showcase, and for each commodity shelf.

In addition, the present invention proposes the inventory management system in which the showcase is provided with a second antenna for communicating with the RFID tag attached to a commodity, second detecting means for detecting the unique identifier of the RFID tag by communicating with the RFID tag through the second antenna, and a displaying apparatus for displaying commodity information of a commodity to which the RFID tag is attached based on the detected unique identifier of the RFID tag.

According to the present invention, since a customer moves a commodity close to the second antenna, the commodity information of the commodity is displayed on the displaying apparatus. Meanwhile, the commodity information includes, for example, a production area display, a material display, a component display, an efficacy display, and an advertisement display of the commodity.

The present invention proposes the inventory management system provided with a tag retrieving box for storing the RFID tag retrieved from a commodity, and the tag retrieving box is provided with a third antenna for communicating with the RFID tag, third detecting means for detecting the unique identifier of the RFID tag by communicating with the RFID tag through the third antenna, and transmitting means for transmitting the detected unique identifier of the RFID tag to the computer through a network, and the computer is provided with second receiving means for deleting the unique identifier received from the tag retrieving box from a list of the unique identifier, the list being memorized in the memorizing means.

According to the present invention, if the RFID tag which becomes unnecessary after a commodity is sold is retrieved, and is stored in the tag retrieving box, the unique identifier of the RFID tag is detected by the third detecting means provided in the tag retrieving box, and the detected data is reflected to the computer. Thereby, the precise inventory status can be always comprehended.

The present invention proposes an inventory management system for managing the inventory status of a displayed commodity by using a computer, the inventory management system being provided with an antenna for communicating with an RFID tag attached to the commodity, detecting means for detecting the unique identifier from the RFID tag by communicating with the RFID tag through the antenna, memorizing means for memorizing a list of the unique identifier detected by the detecting means, and inventory management means for transmitting commodity inventory information to the computer through a network, the commodity inventory information being obtained by comparing the list of the unique identifier, the list being memorized in the memorizing means, with the list of the unique identifier detected by the detecting means.

According to the present invention, if the unique identifier of the RFID tag is detected by the detecting means, such a unique identifier is memorized in the memorizing means of the inventory management means. The commodity inventory information is transmitted to the computer, the inventory information being obtained by comparing information memorized in the memorizing means with information received from the detecting means. Thereby, the computer can always comprehend the unique identifier of the RFID tag of the commodity, so that the inventory management of the commodity becomes to be always available based on the unique identifier of the RFID tag.

As an example of a preferred aspect of the present invention, the present invention proposes a system in which the inventory management means issues a transmission request for transmitting the unique identifier to the detecting means, and the detecting means transmits the list of the unique identifier under detection to the inventory management means according to the transmission request.

A time for reading the unique identifier of the RFID tag influences the number of RFID tags to be detected in the detecting means, so that if data is sequentially transferred from the detecting means to the inventory management means, the process becomes complex in the inventory management means. In the present invention, the detecting means transfers the data at a time when the inventory management means issues the request, so that the process in the inventory management means can be simplified.

As an example of a preferred aspect of the present invention, the present invention proposes a system in which when some change is induced in the inventory status, the inventory management means transmits the inventory information related to the change to the computer.

According to the present invention, the inventory information transferred to the computer is limited only to such a case that some change is induced in the inventory status, so that an amount of data received by the computer can be considerably reduced. Thereby, network resource can be effectively utilized, and the process load for the computer can be reduced.

In an example of a preferred aspect of the present invention, a plurality of detecting means are provided to one inventory management means, or a plurality of antennas are provided to one detecting means. Such inventions are suitable to the inventory management for a commodity shelf such as a showcase. Specifically, a stage in which a commodity is stored can be comprehended by allocating the detecting means in each stage of the commodity shelf. By allocating a plurality of antennas in each stage of the commodity shelf, a location at which the commodity is stored can be comprehended without providing many expensive detecting means.

Other objects, configurations, and effects of the present invention except the above will be apparent in the following detailed description.

### Brief description of several views of the drawings

FIG. 1 is a configuration diagram of an inventory management system;
FIG. 2 is an external view of a commodity;
FIG. 3 is a functional block diagram of a handy terminal;
FIG. 4 is a functional block diagram of a showcase;
FIG. 5 is a functional block diagram of a reading apparatus;
FIG. 6 is a functional block diagram of an antenna unit;
FIG. 7 is a functional block diagram of an information displaying apparatus;
FIG. 8 is a functional block diagram of a tag retrieving box;
FIG. 9 is a functional block diagram of a store computer;
FIG. 10 is a diagram illustrating an example of commodity information;
FIG. 11 is a diagram illustrating an example of shelf information;
FIG. 12 is a diagram illustrating an example of minimum inventory information;
FIG. 13 is a diagram illustrating an example of tag corresponding information;
FIG. 14 is a diagram illustrating an example of shelf inventory information;
FIG. 15 is a diagram illustrating an example of history information;
FIG. 16 is a diagram illustrating an example of inventory management table;
FIG. 17 is a functional block diagram of a reading apparatus according to another example; and
FIG. 18 is a functional block diagram of a reading apparatus according to yet another example.

### Detailed description of the invention

An inventory management system according to an embodiment of the present invention will be described as referring to the drawings. In the present embodiment, such a case will be described that a stocked commodity is managed in a store selling a health drink such as a nutritious drink.

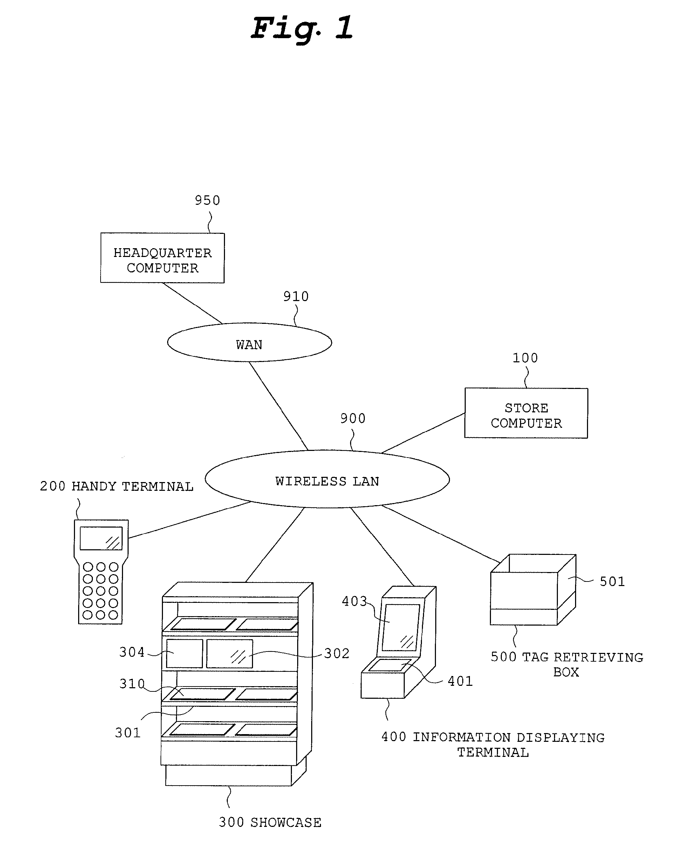

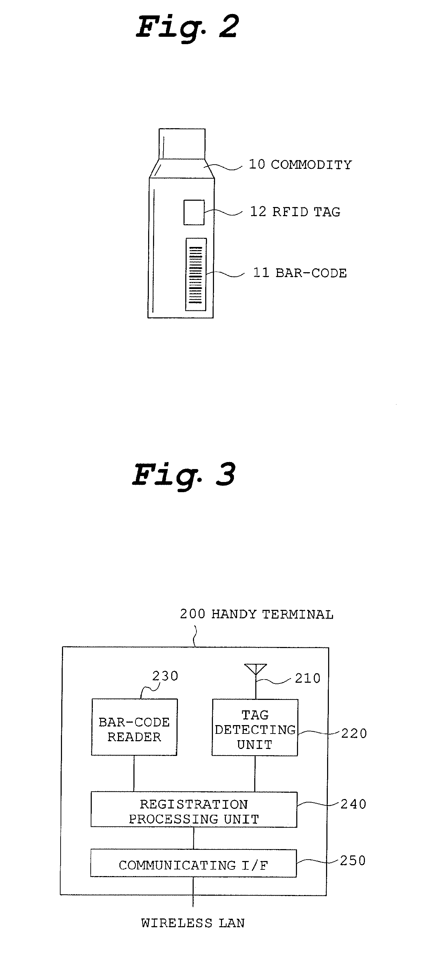

FIG. 1 illustrates an overall configuration view of the inventory management system. FIG. 2 illustrates an external view of a commodity. As illustrated in FIG. 1, this inventory management system manages the number of stocked commodities 10 with a store computer 100 provided in a store. As illustrated in FIG. 2, an RFID tag 12 in which a unique number is implanted as a unique identifier is attached to the commodities 10. An identification number indicating a commodity type is displayed by a bar-code 11 in the commodities 10. In the present embodiment, a JAN (Japanese Article Number) code is used as the identification number. The present invention manages a stocked commodity based on the JAN code and a unique number of the RFID 12 by using the store computer 100.

In this inventory management system, a wireless LAN 900 is constructed in the store. The wireless LAN 900 is connected with the store computer 100, a handy terminal 200 for a store clerk, a showcase 300 displaying the commodity 10 in a cooling condition, an information displaying terminal 400 displaying a variety of pieces of information of the commodity 10, and a tag retrieving box 500 storing the RFID tag 12 retrieved from the commodity 10 after such a commodity 10 has been sold. The wireless LAN 900 can communicate with a headquarter computer 950 centrally managing the store computer 100 through a WAN 910 such as the Internet.

First, the handy terminal 200 will be described referring to FIG. 3. FIG. 3 is a functional block diagram of the handy terminal 200. This handy terminal 200 is used when the JAN code of the commodity 10 and the unique number of the RFID 12 attached to the commodity 10 are registered to the store computer 100 when the commodity 10 is received. As illustrated in FIG. 2, this handy terminal 200 is provided with an antenna 210 and a tag detecting unit 220 forming a reading apparatus of the RFID tag 12, a bar-code reader 230 reading the bar-code 11, a registration processing unit 240 requesting the store computer 100 to register the commodity 10, and a communicating interface 250 for connecting to the wireless LAN 900. The registration processing unit 240 transmits the unique number of the RFID tag 12, the unique number being read by the tag detecting unit 220, and the JAN code read by the bar-code reader 230 to the store computer 100 as a request for registering the commodity 10.

Next, the showcase 300 will be described. As illustrated in FIG. 1, the showcase 300 is provided with a commodity shelf 301 with a plurality of stages for displaying the commodity 10, and a cooling mechanism for cooling the commodity 10. The cooling mechanism is the same as the conventional well-known one, so that the description will be omitted. On the upper surface of each commodity shelf 301, an antenna unit 310 for communicating with each RFID tag 12 of the displayed commodity 10 is provided. A pair of the antenna units 310 are, for example, provided in parallel on the left and right sides of the upper surface of each commodity shelf 301. The front upper part of the showcase 300 is provided with an antenna 302 for communicating with the RFID tag 12 of the commodity 10, a tag detecting unit 303 detecting the unique number from the RFID tag 12 of the commodity 10 which is moved close to the antenna 302, and a displaying apparatus 304 displaying information of the commodity 10.

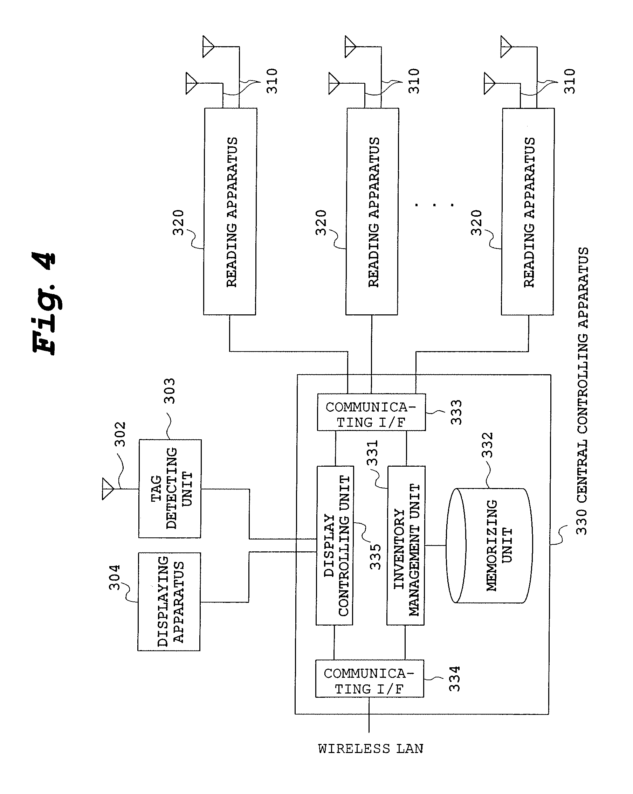

FIG. 4 illustrates a functional block diagram of the showcase 300. FIG. 4 illustrates only the components related to the inventory management system to simplify the description, and other component such as a cooling mechanism is omitted. As illustrated in FIG. 4, this showcase 300 is provided with a plurality of reading apparatuses 320 provided on each stage of each commodity shelf 301, and a central controlling apparatus 330 centrally controlling each reading apparatus 320 as intermediating between each reading apparatus 320 and the store computer 100.

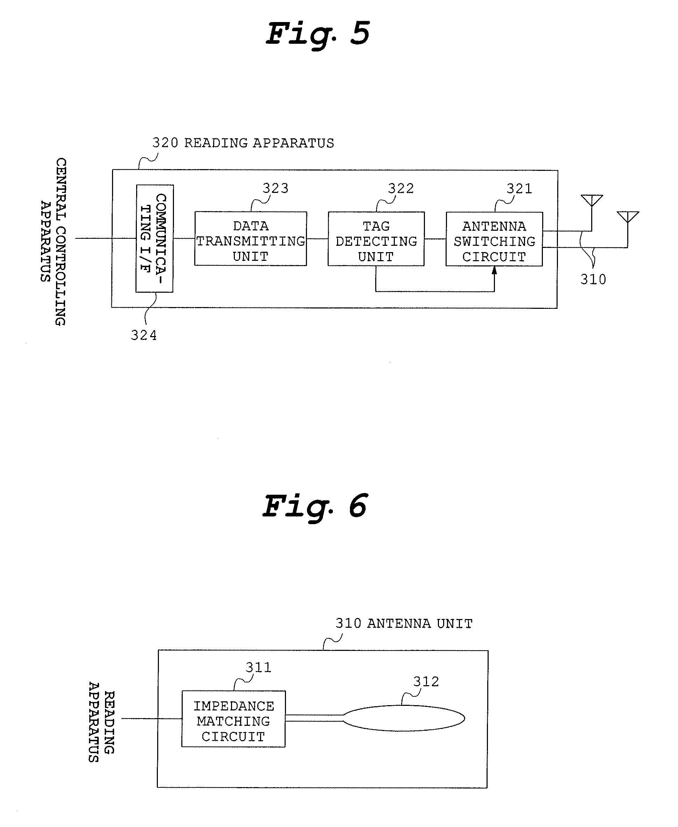

As illustrated in FIG. 4, each reading apparatus 320 is connected to two antenna units 310 provided in each corresponding commodity shelf 301. As illustrated in FIG. 5, each reading apparatuses 320 is provided with an antenna switching circuit 321 switching the connection of the antenna unit 310, a tag detecting unit 322 reading the unique number from the RFID tag 12 within an communication area of the antenna unit 310, a data transmitting unit 323 transmitting the unique number of the RFID tag 12, the unique number being read by each antenna unit 310, to the central controlling apparatus 330, and a communicating interface 324 for connecting to the central controlling apparatus 330. The tag detecting unit 322 controls the antenna switching circuit 321 to connect to one side of the antenna units 310, and sequentially obtains the unique number of the RFID tag 12 by using the antenna units 310. The tag detecting unit 322 controls the antenna switching circuit 321 to switch the connection to the other antenna unit 310, and continuously repeats an operation for sequentially obtaining the unique number of the RFID tag 12 by using the other antenna unit 310. When receiving a data transmission request from the central controlling apparatus 330, the data transmitting unit 323 transmits the unique number of the RFID tag 12, the unique number being detected by the tag detecting unit 322 to the central controlling apparatus 330.

As illustrated in FIG. 6, the antenna unit 310 is provided with an impedance matching circuit 311 and a loop antenna 312 in a thin box-type cabinet. The antenna unit 310 and the reading apparatuses 320 are connected by a coaxial cable.

As illustrated in FIG. 4, the central controlling apparatus 330 is provided with an inventory management unit 331 transmitting inventory information to the store computer 100 based on the unique number of the RFID tag 12, the unique number being received from each reading apparatuses 320, a memorizing unit 332 used for counting the unique number, and the like in the inventory management unit 331, a communicating interface 333 for connecting with the reading apparatus 320, and a communicating interface 334 for connecting with the wireless LAN 900. The inventory management unit 331 sequentially requests each connected reading apparatus 320 to transmit data, and when receiving the unique number of the RFID tag 12 from each reading apparatuses 320, temporarily memorizes the unique number and a shelf number identifying the commodity shelf 301 in which the reading apparatuses 320 of a transmitting source is provided in the memorizing unit 332. Here, the inventory management unit 331 compares data received from the reading apparatus 320 with data memorized in the memorizing unit 332, and when any change is found, transmits the changed part of the data to the store computer 100. That is, the inventory management unit 331 transmits only difference information to the store computer 100.

The central controlling apparatus 330 is further provided with the antenna 302 and the tag detecting unit 303 attached on the front upper part of the showcase 300, and a display controlling unit 335 connected to the displaying apparatus 304. The display controlling unit 335 requests the store computer 100 to transmit commodity information by using the unique number of the RFID tag 12, the unique number being read by the tag detecting unit 303, as a key. When obtaining information regarding the commodity 10 from the store computer 100, the display controlling unit 335 displays the obtained information in the displaying apparatus 304.

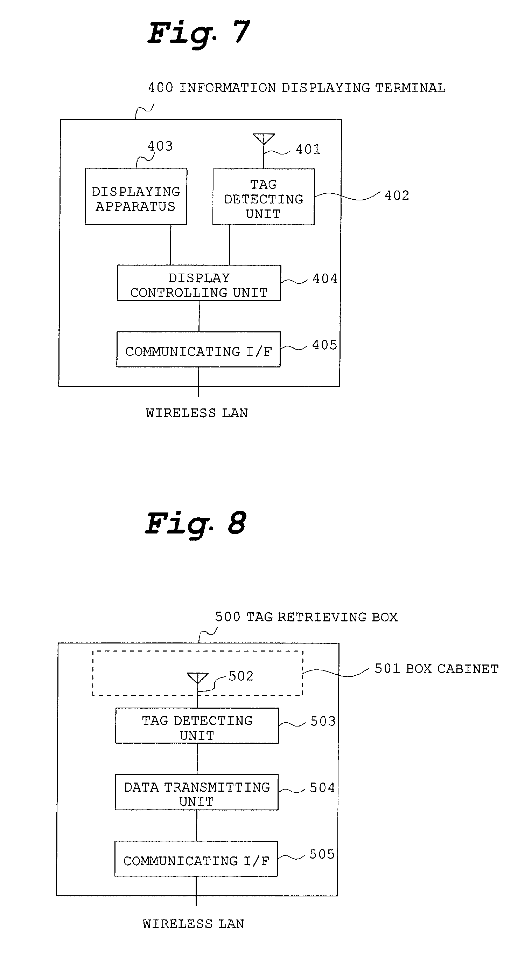

Next, the information displaying terminal 400 will be described as referring to FIG. 7. FIG. 7 is a functional block diagram of the information displaying terminal 400. This information displaying terminal 400 includes only an information displaying function of the commodity 10 as same as the function of the showcase 300. As illustrated in FIG. 7, the information displaying terminal 400 is provided with an antenna 401 for communicating with the RFID 12 of the commodity 10, a tag detecting unit 402 detecting the unique number from the RFID tag 12 of the commodity 10 which is moved close to the antenna 401, a displaying apparatus 403 displaying information of the commodity 10, a display controlling unit 404 controlling commodity information to be displayed to the displaying apparatus 403, and a communicating interface 405 for connecting to the wireless LAN 900. The display controlling unit 404 requests the store computer 100 to transmit the commodity information by using the unique number of the RFID tag 12, the unique number being read by the tag detecting unit 402, as a key. When obtaining the information regarding the commodity 10 from the store computer 100, the display controlling unit 404 displays the obtained information in the displaying apparatus 403.

Next, the tag retrieving box 500 will be described as referring FIG. 8. FIG. 8 is a functional block diagram of the tag retrieving box 500. The tag retrieving box 500 is provided with a box cabinet 501 (refer to FIG. 1), whose upper surface is open, and which stores the RFID tag 12 taken off from the commodity 10, an antenna 502 and a tag detecting unit 503 forming a reading apparatus of the RFID tag 12, a data transmitting unit 504 transmitting the unique number of the RFID tag 12, the unique number being read by the tag detecting unit 503, to the store computer 100 as tag retrieving information, and a communicating interface 505 for connecting to the wireless LAN 900. The antenna 502 is attached on a bottom surface of the box cabinet 501.

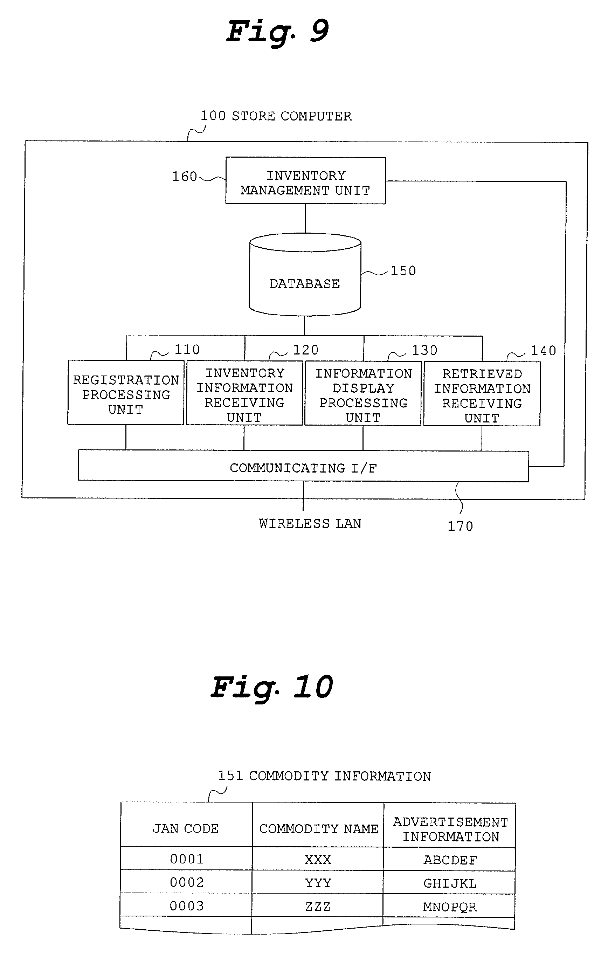

Next, the store computer 100 will be described as referring to FIG. 9. FIG. 9 is a functional block diagram of the store computer 100. As illustrated in FIG. 9, the store computer 100 is provided with a registration processing unit 110 processing a commodity registering request from the handy terminal 200, an inventory information receiving unit 120 obtaining inventory status of the showcase 300, an information display processing unit 130 providing commodity information to the showcase 300 and the information displaying terminal 400, a retrieved information receiving unit 140 processing tag retrieving information from the tag retrieving box 500, a database 150 of relational type, which is memorizing means for memorizing a variety of pieces of information, an inventory management unit 160 managing the inventory based on data memorized in the database 150, and a communicating interface 170 for connecting to the wireless LAN 900.

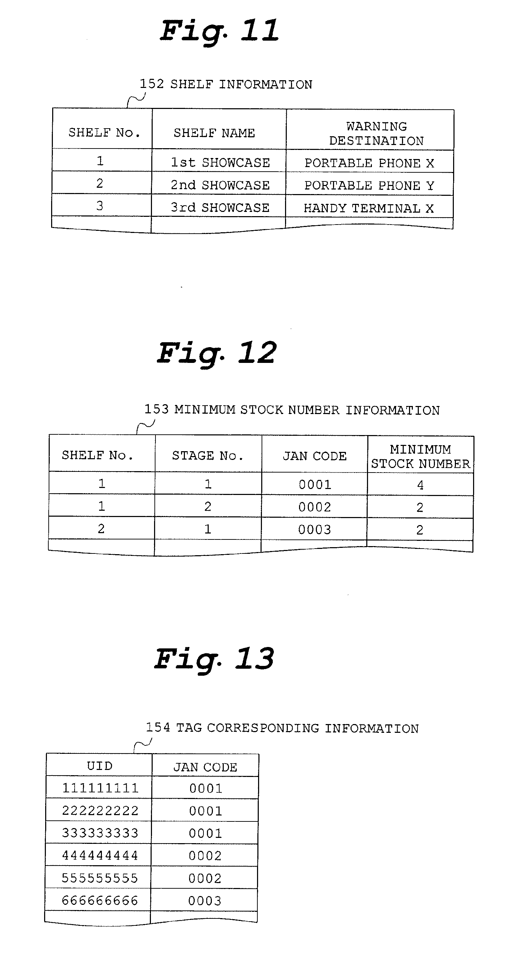

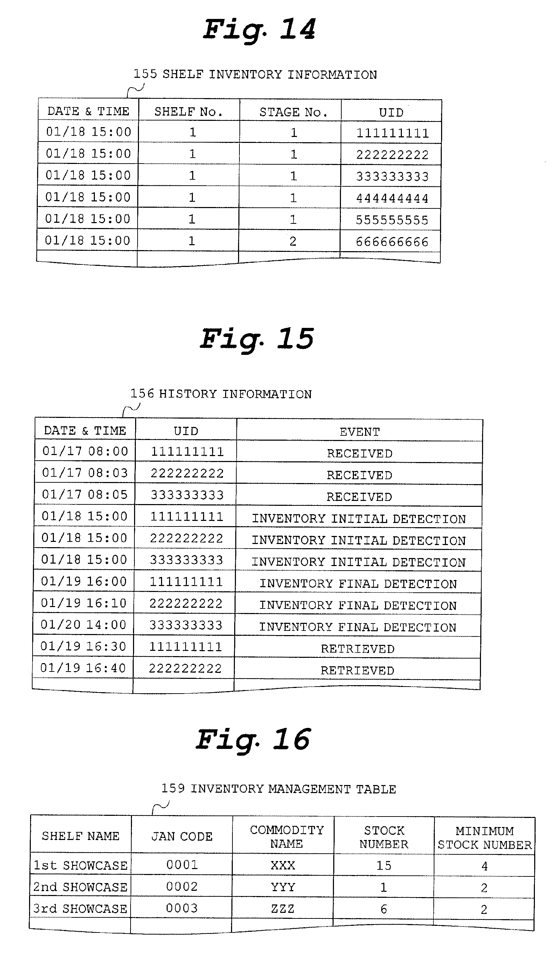

The data memorized in the database 150 will be described. The database 150 records commodity information 151 illustrated in FIG. 10, shelf information 152 illustrated in FIG. 11, minimum stock number information 153 illustrated in FIG. 12, tag corresponding information 154 illustrated in FIG. 13, shelf stock information 155 illustrated in FIG. 14, and history information 156 illustrated in FIG. 15.

As illustrated in FIG. 10, the commodity information 151 records the JAN code of the commodity 10 treated in a store, and a variety of pieces of information regarding the commodity 10. In the present embodiment, the commodity information 151 memorizes a commodity name, and advertisement information stored in a binary format. This commodity information 151 is previously inputted before the inventory management system is started to be operated, and also is updated according to the addition of a treated commodity and the change of advertisement content.

As illustrated in FIG. 11, the shelf information 152 memorizes information regarding each showcase 300, and memorizes a shelf number for uniquely identifying each showcase 300, a description text for describing a name of such a showcase 300, and the like, and warning destination information when a warning regarding the inventory is issued in such a showcase 300. This shelf information 152 is previously inputted before the inventory management system is started to be operated, and is updated according to the lay out change for a store and the change of the number of stages of the showcase.

The minimum stock number information 153 memorizes the minimum number of stocks for each commodity shelf 301 of each showcase 300, and as illustrated in FIG. 12, memorizes a shelf number of the showcase 300, a stage number for uniquely identifying the commodity shelf 301 of such a showcase 300, the JAN code of the commodity 10 displayed in such a commodity shelf 301, and the minimum number of such stocked commodities. This minimum stock number information 153 is previously inputted before the inventory management system is started to be operated, and is updated according to the lay out change for a store and the change of the number of stages of the showcase.

The tag corresponding information 154 memorizes the correspondence relation between the RFID tag 12 attached to the commodity 10 and the commodity type of the commodity 10, and as illustrated in FIG. 13, memorizes the unique number (in the figure, displayed as [UID]) of the RFID tag 12, and the JAN code. This tag corresponding information 154 is updated by the registration processing unit 110.

The shelf stock information 155 memorizes the unique number of the RFID tag 12 of a commodity displayed in each showcase 300, and as illustrated in FIG. 14, memorizes a date and time when the unique number is obtained, a shelf number and a stage number of the showcase 300, and the unique number of the RFID tag 12. This shelf stock information 155 is updated by the inventory information receiving unit 120.

The history information 156 memorizes the history of an event induced for the RFID tag 12, and as illustrated in FIG. 15, memorizes an event occurrence date and time, the unique number of the RFID tag 12, and content of the event. This history information 156 is updated by the registration processing unit 110, the inventory information receiving unit 120, and the retrieved information receiving unit 140. In the present embodiment, the following events are recorded as the history information: (a) The commodity 10 is received in a store; (b) The unique number of the RFID tag 12 attached to the commodity 10 is initially or finally detected; and (c) The RFID tag 12 attached to the commodity 10 is retrieved.

When receiving the JAN code of the commodity 10 and the unique number of the RFID tag 12 attached to the commodity 10 from the handy terminal 200, the registration processing unit 110 stores this JAN code and unique number as the tag corresponding information 154 in the database 150. When receiving the JAN code and the unique number, the registration processing unit 110 adds a receiving date and time and the unique number of the data, and such a fact that the receiving event is induced to the history information 156 of the database 150.

When receiving the list of the unique number of the RFID tag 12 and the stage number of the commodity 10 displayed in the showcase 300 from such a showcase 300, the inventory information receiving unit 120 stores the receiving date and time of the data, the shelf number of the showcase 300 of a transmitting source, and the received data as the shelf stock information 155 in the database 150. Here, when the received unique number is not yet registered in the shelf stock information 155, the inventory information receiving unit 120 adds the receiving date and time and the unique number of the data, and such a fact that the initial detection event is induced to the history information 156 of the database 150. When receiving data from the showcase 300, and when the unique number recorded in the shelf stock information 155 as the inventory of the showcase 300 is not included in the received data, the inventory information receiving unit 120 adds the receiving date and time and the unique number of the data, and such a fact that the final detection event is induced to the history information 156 of the database 150.

When receiving a request for obtaining commodity information from the showcase 300 or the information displaying terminal 400, the information display processing unit 130 extracts commodity information of the commodity 10 such as advertisement information from the commodity information 151 of the database 150 by using the unique number of the RFID tag 12, the unique number being included in such an obtaining request, as a key, and transmits the commodity information to the requesting source.

When receiving the unique number of the RFID tag 12 from the tag retrieving box 500, the retrieved information receiving unit 140 deletes an entry including such a unique number from the shelf stock information 155. When receiving the unique number, the retrieved information receiving unit 140 adds the receiving date and the unique number of the data, and such a fact that the retrieval event is induced to the history information 156 of the database 150.

The inventory management unit 160 provides a variety of inventory management services based on the data stored in the database 150 according to the request from an employee of a store, and the like. Specific functions of the inventory management unit 160 are as follows: (a) a function for browsing and updating each information stored in the database 150; (b) a function for combining and browsing each information stored in the database 150; (c) a function for warning the lack of stock; and (d) a function for comprehending the buying behavior. The function of (b) is realized by using the relational function of the database 150, and information regarding the inventory management can be obtained from a variety of point of views by means of the function. For example, by incorporating the commodity information 151, the shelf information 152, the minimum stock number information 153, the tag corresponding information 154, and the shelf stock information 155, an inventory management table 159 as illustrated in FIG. 16 can be obtained. As illustrated in FIG. 16, the inventory management table 159 is obtained by extracting a shelf name, the JAN code, a commodity name, the number of stocks, and the minimum number of stocks. An employee of a store, and the like can easily comprehend the current inventory status of each showcase 300 with such an inventory management table 159. Meanwhile, in the inventory management table 159 of FIG. 16, while the number of stocks is counted for each showcase 300, the number of stocks may be counted for each commodity (each JAN code), or may be counted for each commodity shelf 301 of the showcase 300.

The inventory management unit 160 calculates the number of stocks by counting the shelf stock information 155 for each showcase 300, and the function for warning the lack of stock of the above (c) compares the number of stocks with the minimum number of stocks stored in the minimum stock number information 153, and decides the comparison result. When the number of stocks is equal to or less than the minimum number of stocks, the function for warning the lack of stock obtains a warning destination as referring to the shelf information 152, and notifies such a warning destination of a prescribed message. A variety of message notifying means can be selected according to the warning destination. For example, the massage may be displayed on a screen of the store computer 100, may be transmitted as a mail to a portable phone of a manager through a portable phone net, and may be transmitted to the handy terminal 200 through the wireless LAN 900.

The function for comprehending the buying behavior of the above (d) extracts the detection status of the RFID tag 12 detected by the showcase 300 from data of the history information 156, and guesses the customer interest level for the commodity 10 to which the RFID tag 12 is attached from the extracted data. Specifically, when the RFID tag 12 of a unique number is detected again after the RFID tag 12 of the unique number becomes not to be detected, it can be comprehended that a customer returns the commodity 10 to the commodity shelf 301 after picking up the commodity 10. It can be guessed that such a behavior is [A customer is interested in a commodity, but does not result in buying the commodity]. As another example, when the receiving time is different for the plurality of commodities 10 whose kinds are the same, by accumulating a data regarding what commodity 10 a customer first picks up, it can be guessed how strongly the customer needs the freshness for the commodity 10. Thereby, by utilizing a variety of statistical techniques, it becomes possible to comprehend the customer buying behavior and utilize the comprehended data for the marketing.

As described above, according to the inventory management system according to the present embodiment, the unique number is detected from the RFID tag 12 attached to the commodity 10 displayed in the showcase 300, and the detection status is recorded and accumulated in the store computer 100, so that the inventory information regarding the commodity 10 can be comprehended in real time. Particularly, in the inventory management system according to the present embodiment, the inventory status of the commodity 10 can be counted as needed from a variety of point of views such as each showcase 300 and each commodity, so that the convenience becomes high. In the inventory management system according to the present embodiment, the customer buying behavior can be comprehended, so that the comprehended data can be utilized for the marketing. In the inventory management system according to the present embodiment, if the number of commodities 10 becomes equal to or less than a previously-set prescribed number pf stocks, a message is transmitted to a previously-set warning destination, so that the appropriate inventory status can be easily maintained.

Furthermore, in the inventory management system according to the present embodiment, if a customer moves the commodity 10 close to the antenna 302 of the showcase 300 or the antenna 401 of the information displaying terminal 400, information regarding the commodity 10 is displayed in the displaying apparatus 304 or the displaying apparatus 403, so that the sales promotion effect can be anticipated.

As described above, while an embodiment of the present invention is described in detail, the present invention is not limited to this embodiment. While the handy terminal 200 is used only for the registering work when receiving the commodity 10 in the above embodiment, as needed, the handy terminal 200 may be used to detect the stocked commodities 10. That is, in some types for operating a store, all the commodities 10 are not always displayed in the showcase 300, so that for the commodity 10 placed on a warehouse or a shelf in which a reading apparatus of the RFID tag 12 is not provided, the handy terminal 200 reads the RFID tag 12 attached to such a commodity 10, and the read RFID tag 12 may be managed by the store computer 100.

In the above embodiment, data regarding the RFID tag 12, the data being memorized in the shelf stock information 155 of database 150, is deleted if such an RFID tag 12 is detected in the tag retrieving box 500, and such an RFID tag 12 becomes not to be identified as a stock on the system. However, when the detection-trouble is induced in the tag retrieving box 500, or the commodity 10 is stolen, even though the commodity 10 is lost, it is possible to be realized on the system that the stocked commodity 10 still exists. Thus, it is preferable to delete data, which can not be received as shelf inventory information in a prescribed time from the showcase 300, of data memorized in the shelf stock information 155. Meanwhile, in this case, it is preferable to add such a fact in the history information 156 that such an event is induced.

The inventory management system according to the above embodiment and the existing POS system may be caused to work with each other. In this case, by providing a register with the reading apparatus of the RFID tag 12, the event for selling the commodity 10 can be certainly comprehended. Thereby, it becomes possible to manage the inventory in a higher accuracy. Since the inventory status can be provided to the POS system in real time, it becomes possible to appropriately order.

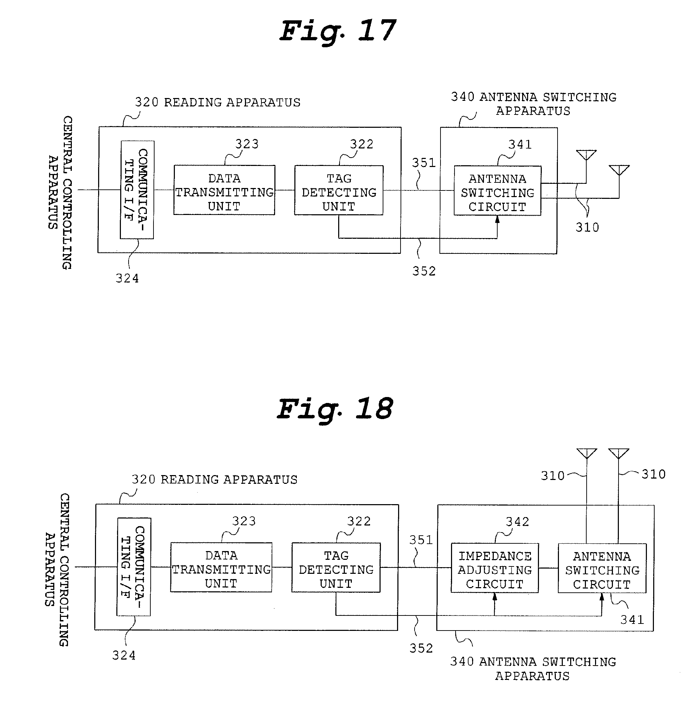

In the above embodiment, while the antenna switching circuit 321 is provided to the reading apparatus 320, and also, the plurality of antenna units 310 are connected to the reading apparatus 320, the antenna switching circuit 321 may be separated from the reading apparatus 320. Specifically, as illustrated in FIG. 17, an antenna switching apparatus 340 including an antenna switching circuit 341 is placed between the reading apparatus 320 and the antenna unit 310. The antenna switching circuit 341 and the reading apparatus 320 are connected by a coaxial cable 351 transmitting a high-frequency signal, and a control signal line 352 transmitting a control signal for switching antennas. In such a configuration, the length for wiring a coaxial cable whose diameter is relatively large, and which is difficult to be handled can be reduced as a whole, so that a space for the placing is reduced and the degree of freedom for the lay out is improved.

By the way, in the reading apparatus 320 of the above embodiment, if the number of commodities 10 placed on the commodity shelf 301 becomes many, the reading accuracy may be degraded. One of such causes is that the number of commodities 10 influences the impedance matching between the reading apparatus 320 and the loop antenna 312. Thus, as illustrated in FIG. 18, it is preferable to further provide an impedance adjusting circuit 342 to the antenna switching apparatus 340 illustrated in FIG. 17. Meanwhile, in this case, the impedance matching circuit 311 of the antenna unit 310 can be eliminated as needed. The impedance adjusting circuit 342 may be provided to the reading apparatus 320 of the above embodiment.

In the above embodiment, while the store computer 100, the showcase 300, and the like are connected by the wireless LAN 900, the network type is not limited. That is, the wireless LAN and the wired LAN may be used at the same time in consideration of the allocation of each apparatus, and the like.

## Claims

1. An inventory management system, comprising:
an antenna (310) for communicating with an RFID tag (12) attached to a displayed commodity (10);
detecting means (322) for detecting a unique identifier from the RFID tag (12) by communicating with the RFID tag (12) through the antenna (310);
memorizing means (332) for memorizing a list of the unique identifier detected by the detecting means (322); and
inventory management means (331) for transmitting commodity inventory information to a computer (100) through a network (900), the commodity inventory information being obtained by comparing the list of the unique identifier, the list being memorized in the memorizing means (332) with a list of the unique identifier detected by the detecting means (322).

2. The inventory management system according to claim 1,
wherein the inventory management means (331) issues a transmitting request for transmitting the unique identifier to the detecting means (322), and
the detecting means (322) transmits the list of the unique identifier under detection to the inventory management means (331) according to the transmitting request.

3. The inventory management system according to claim 1,
wherein the inventory management means (331) transmits to the computer (100) the inventory information relating to a change when the change is induced in an inventory status.

4. The inventory management system according to claim 1,
wherein one inventory management means (331) is provided with a plurality of the detecting means (322).

5. The inventory management system according to claim 1,
wherein one detecting means (322) is provided with a plurality of the antennas (310).

6. An inventory management system being provided with a showcase (300) and a computer (100) managing the inventory status of a commodity (10) displayed in the showcase,
wherein the showcase (300) includes:
a commodity shelf (301) for displaying a commodity (10) to which an RFID tag (12) is attached;
a first antenna (310) for communicating with the RFID tag (12) attached to a commodity (10) on the commodity shelf (301);
first detecting means (322) for detecting a unique identifier of the RFID tag (12) by communicating with the RFID tag (12) through the first antenna (310); and
transmitting means (323, 331) for transmitting the detected unique identifier of the RFID tag (12) to the computer (100) through a network (900),
the computer (100) includes:
first receiving means (120) for storing a list of the unique identifier received from the first detecting means (323, 331) of the showcase (300) in prescribed memorizing means (150); and
inventory management means (160) for managing commodity inventory based on the unique identifier of the RFID tag (12), the unique identifier being memorized in the memorizing means (150).

7. The inventory management system according to claim 6,
wherein the memorizing means (150) of the computer (100) memorizes a corresponding list (154) in which the unique identifier of the RFID tag (12) and an identification number indicating a type of a commodity (10) to which the RFID tag (12) is attached are related to each other, and
the inventory management means (160) counts the number of stocked commodities (10) for each commodity type.

8. The inventory management system according to claim 7,
wherein the inventory management means (160) counts the number of stocked commodities (10) for each commodity type and each showcase (300).

9. The inventory management system according to claims 6, 7, and 8,
wherein the inventory management means (160) notifies a manager of a message when the number of stocked commodities (10) becomes equal to or less than a prescribed threshold.

10. The inventory management system according to claims 6, 7, 8, and 9,
wherein the showcase (300) includes:
a second antenna (302) for communicating with the RFID tag (12) attached to a commodity (10);
second detecting means (303) for detecting the unique identifier of the RFID tag (12) by communicating with the RFID tag (12) through the second antenna (302); and
a displaying apparatus (304) for displaying commodity information of a commodity (10) to which the RFID tag (12) is attached based on the detected unique identifier of such an RFID tag (12).

11. The inventory management system according to claims 6, 7, 8, 9, and 10, comprising:
a tag retrieving box (500) for storing the RFID tag (12) retrieved from a commodity (10),
wherein the tag retrieving box (500) includes:
a third antenna (502) for communicating with the RFID tag (12);
third detecting means (503) for detecting the unique identifier of the RFID tag (12) by communicating with the RFID tag (12) through the third antenna (502); and
transmitting means (504) for transmitting the detected unique identifier of the RFID tag (12) to the computer (100) through the network (900), and
the computer (100) includes:
second receiving means (140) for deleting the unique identifier received from the tag retrieving box (500) from a list of the unique identifier, the list being memorized in the memorizing means (150).
